# DEMANDE DE BREVET EUROPEEN

(11) **EP 1 875 796 A1**
(43) Date de publication de la demande: **09.01.2008**
(21) Numéro de dépôt: 07290786.8
(22) Date de dépôt: 26.06.2007
(51) Int. Cl.: A01G 9/10

(54) **Procédé pour fabriquer des mottes de culture pour jeunes plants**

(30) Priorité: 03.07.2006 FR 0606075
(71) Demandeur: Fertil (S.A.S.), 88120 Le Syndicat (FR)
(72) Inventeur: de la Martiniere, Guy, 92100 Boulogne-Billancourt (FR)
(74) Mandataire: Hammond, William

(57) **Abrégé**

Ce procédé pour produire des mottes de culture pour jeunes plants, comprend trois étapes :
- en premier lieu, on dispose dans une rigole horizontale un tissu non-tissé qui épouse sensiblement la forme de cette rigole et dont les bords coopèrent avec la rigole;
- en deuxième lieu, on dépose, dans le tissu non-tissé, une première couche d'un premier substrat, puis au moins une deuxième couche d'un deuxième substrat, et
- en troisième lieu, on referme l'un sur l'autre les bords du tissu non-tissé et on les solidarise.

Application notamment dans le domaine horticole.

## Description

La présente invention concerne un procédé pour produire des mottes de culture pour jeunes plants et motte ainsi obtenue.

Actuellement, pour cultiver de jeunes plants, on utilise des plateaux à alvéoles, dans lesquelles sont disposées des mottes de culture constituées par un terreau enveloppé dans un tissu non-tissé. Pour produire de telles mottes, on introduit du terreau dans un cylindre en un tissu non-tissé et on découpe des rondelles de longueur adaptée à la hauteur des alvéoles. L'introduction du terreau dans le cylindre en tissu non-tissé est réalisé le plus souvent par création d'une dépression dans ce cylindre : le terreau est ainsi aspiré dans le cylindre.

Ce procédé de l'art antérieur comporte de nombreux avantages par rapport au système traditionnel consistant à déposer directement du terreau dans les alvéoles d'un plateau. Par contre, elle présente un inconvénient important, car lors de la fabrication des mottes dans un tissu non-tissé, on ne sait pas le plus souvent quelle en sera l'utilisation. On donne donc aux mottes des caractéristiques agronomiques standard, qui conviendront dans de nombreuses situations, mais qui pourront se révéler inadaptées dans certains cas.

Ainsi, dans le cas où certaines boutures sont très dures, et d'autres sont très fragiles, les premières risquent de s'enfoncer trop profondément dans le terreau, tandis que les secondes peuvent être impossible à mettre en place si on ne fait pas auparavant un avant-trou, par exemple, avec un stylet.

De même, certaines cultures peuvent demander un terreau aux particules très fines à l'endroit du talon de la bouture, donc un substrat peu aéré, mais par la suite préférer dans le reste de la motte un substrat très aéré.

Aussi a-t-il déjà été proposé de faire un trou dans de telles mottes et d'y disposer un autre substrat tel qu'un gel, par exemple. On crée ainsi deux zones présentant des caractéristiques agronomiques différentes ; mais, d'une part, l'une des zones est nécessairement très petite en proportion par rapport à l'autre, et d'autre part, le substrat introduit dans un tel trou est obligatoirement au moins pâteux, ou même très fluide, ce qui ne correspond pas à un besoin agronomique.

Aussi, un des buts de la présente invention est-il de fournir un procédé qui permet d'obtenir une motte comportant une juxtaposition de substrats sur toute sa hauteur afin d'obvier les inconvénients rapportés ci-dessus.

Un autre but de la présente invention est de fournir un tel procédé dont la mise en oeuvre soit simple, fiable, adaptée aux différents substrats et d'un coût aussi faible que possible.

Ces buts, ainsi que d'autres qui apparaîtront par la suite, sont atteints par un procédé pour produire des mottes de culture pour jeunes plants, qui est caractérisé, selon la présente invention, par le fait qu'en premier lieu, on dispose dans une rigole horizontale un tissu non-tissé qui épouse sensiblement la forme de cette rigole et dont les bords coopèrent avec cette rigole, qu'en deuxième lieu, on dépose, dans le tissu non-tissé, une première couche d'un premier substrat, puis au moins une deuxième couche d'un deuxième substrat, et qu'en troisième lieu, on referme l'une sur l'autre les bords du tissu non-tissé et on les solidarise.
Avantageusement, la rigole présente en coupe transversale la forme d'un U.

Selon un mode de réalisation de la présente invention, on dépose plus de deux couches de substrat dans le tissu non-tissé.

La présente invention concerne aussi une motte pour jeunes plants qui se présente sous forme d'un volume cylindrique dont la paroi cylindrique est enveloppée par un tissu non-tissé.

La description qui va suivre et qui ne présente aucun caractère limitatif, est relative à un exemple de réalisation de la présente invention afin de mieux permettre à l'homme du métier notamment de comprendre les avantages de celle-ci.

Selon ce procédé, on dispose un tissu non-tissé dans une rigole horizontale, dont les bords coopèrent avec la rigole : le tissu épouse ainsi la forme de celle-ci. De préférence, la rigole présente en coupe transversale la forme de U. Puis, on dépose chaque couche de substrat de façon superposée dans le tissu non-tissé, on referme les bords l'un sur l'autre et on les solidarise par exemple par soudure aux ultra-sons ou par collage : on obtient ainsi un volume allongé, qui peut être, de préférence, cylindrique. Pour obtenir des mottes, on découpe le volume obtenu en tranches.

Chaque lit de substrat présente des caractéristiques physico-chimiques et/ou agronomiques en fonction des plants qui seront implantés dans les mottes obtenues.

Ce procédé permet ainsi de produire des mottes de culture pour jeunes plants dans lesquelles soient juxtaposés des substrats différents sur toute la hauteur de la motte. Il deviendra alors possible de disposer la bouture dans une zone dure ou molle, aérée ou peu aérée, fertilisée ou non, traitée avec un additif ou non, etc.

Les mottes obtenues se présentent comme un volume sensiblement cylindrique dont la paroi cylindrique est enveloppée par le tissu non-tissé.

De telles mottes peuvent être utilisées soit ainsi, soit en les disposant dans les alvéoles d'un plateau alvéolaire connu.

## Revendications

1. - Procédé pour produire des mottes de culture pour jeunes plants, **caractérisé par le fait qu'**en premier lieu, on dispose dans une rigole horizontale un tissu non-tissé qui épouse sensiblement la forme de ladite rigole et dont les bords coopèrent avec ladite rigole, qu'en deuxième lieu, on dépose, dans le tissu non-tissé, une première couche d'un premier substrat, puis au moins une deuxième couche d'un deuxième substrat, et qu'en troisième lieu, on referme l'un sur l'autre les bords dudit tissu non-tissé et on les solidarise.

2. - Procédé selon la revendication 1, **caractérisé par le fait que** la rigole présente en coupe transversale la forme d'un U.

3. - Procédé selon la revendication 1, **caractérisé par le fait que** l'on dépose plus de deux couches de substrat dans le tissu non-tissé.
